# EUROPÄISCHE PATENTSCHRIFT

(11) **EP 1 677 327 B1**
(45) Veröffentlichungstag und Bekanntmachung des Hinweises auf die Patenterteilung: **07.07.2010**
(21) Anmeldenummer: 05110884.3
(22) Anmeldetag: 17.11.2005
(51) Int. Cl.: H01H 51/06, H01H 50/20, H01H 50/24

(54) **Energieversorgungssystem für Startvorrichtung**
Energy supply system for vehicle starter
Système de provision d'énérgie d'un démarreur

(30) Priorität: 30.12.2004 DE 102004063849
(43) Veröffentlichungstag der Anmeldung: 05.07.2006
(73) Patentinhaber: ROBERT BOSCH GMBH, 70442 Stuttgart (DE)
(72) Erfinder: Fuhr, Steffen, 71088, Holzgerlingen (DE); Richter, Ingo, 71706, Markgroeningen (DE); Stoecklein, Henning, 71735, Eberdingen (DE); Braun, Hans, B-3001, Leuven (BE); Weigt, Josef, 71665, Vaihingen (DE)

(56) Entgegenhaltungen:
- EP-A- 0 800 193
- EP-A- 1 435 524
- US-A- 4 769 295

## Beschreibung

### Stand der Technik

Aus der deutschen Offenlegungsschrift 196 06 450 A1 ist ein Energieversorgungssystem für Startvorrichtungen bekannt, das aus einem Energiespeicher und einer Startvorrichtung besteht, die mit dem Energiespeicher mittels einer Energieversorgungsleitung verbunden ist. Die Energieversorgungsleitung kann mittels eines Trennschalters unterbrochen werden. Der Trennschalter ist am Energiespeicher oder sehr nahe am Energiespeicher befestigt. Der Trennschalter selbst ist als zu zündender, gasgeneratorisch betriebener Schalter beschrieben, der einen irreversiblen Trennprozess in Gang setzt.

Die US 4,769,295 zeigt einen verhältnismäßig groß bauenden Trennschalter, der zwischen zwei Batteriepolwannen eingebaut ist.

Die gattungsbildende EP 1 435 524 A1 zeigt einen auf einem Messshunt angeordneten Leistungsschalter, durch den in Notfällen die Batterieversorgung des Kraftfährzeuges abgeschaltet werden kann.

### Vorteile der Erfindung

Das erfindungsgemäße Energieversorgungssystem mit den Merkmalen des Hauptanspruchs hat den Vorteil, dass sich eine besonders kompakte Bauform ergibt, wenn der Trennschalter einen magnetischen Kreis hat, der eine Batteriepolklemme umgibt.

Durch die in den Unteransprüchen aufgeführte Maßnahmen sind vorteilhafte Weiterbildungen des Energieversorgungssystems nach dem Hauptanspruch möglich. Besonders unauffällig und keinen unnötigen Platz verbrauchend ist das System dann, wenn der Trennschalter größenmäßig an eine Batteriepolwanne angepasst ist.

Besonders vorteilhaft ist es, wenn der Trennschalter vollständig in der Batteriepolwanne sitzt. Besonders einfach und kostengünstig lässt sich ein reversibler Trennschalter durch einen elektromagnetischen Schalter verwirklichen.

Es ist des Weiteren vorgesehen, dass der Trennschalter eine Kontaktbrücke hat, die zur Verbindung eines Doppelkontakts vorgesehen ist. Durch diese Ausbildung ist sichergestellt, dass zwischen der Startvorrichtung und dem Energiespeicher zwei Trennstellen zu überbrücken sind. Dies führt zu einem besonders sicheren Trennen.

Nach einer weiteren Ausgestaltung ist vorgesehen, dass an der Batteriepolklemme eine den Trennschalter haltende Stromschiene befestigt ist. Durch diese Art des Befestigens sind weitere Halteelemente nicht erforderlich, um den Trennschalter ortsfest zu befestigen.

### Zeichnungen

In den Zeichnungen sind Ausführungsbeispiele eines erfindungsgemäße Energieversorgungssystems für Startvorrichtungen dargestellt. Es zeigen:
- Figur 1a bis Figur 1c: schematische Darstellungen eines Energieversorgungssystems,
- Figur 2: eine räumliche Ansicht auf einen ersten Trennschalter,
- Figur 3: eine räumliche Ansicht auf ein zweites Ausführungsbeispiel eines Trennschal- ters.

### Beschreibung

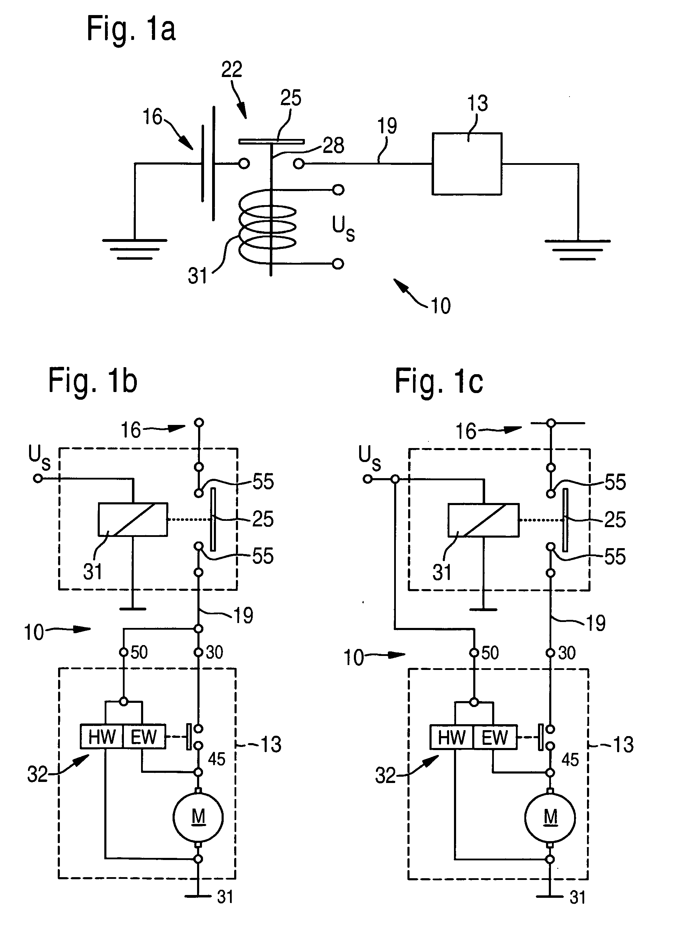

In Figur 1a ist ein Energieversorgungssystem 10 für Startvorrichtungen 13 darstellt. Dieses Energieversorgungssystem 10 weist neben der Startvorrichtung 13 einen Energiespeicher 16 auf, der bspw. als mögliche Starterbatterie ausgebildet sein kann. Zwischen dem Energiespeicher 16 und der Startvorrichtung 13 ist eine Energieversorgungsleitung 19 angeordnet, die als "Starterkabel" die Startvorrichtung 13 mit elektrischer Energie versorgt. Zwischen dem Energiespeicher 16 und der Startvorrichtung 13 ist ein Trennschalter 22 angeordnet, der als reversibler Trennschalter 22 ausgeführt ist und unmittelbar am Energiespeicher 16 angeordnet ist. Der Trennschalter 22 weist eine Kontaktbrücke 25 auf, mittels derer zwei hier nicht näher bezeichnete Kontakte elektrisch verbindbar sind, um die Startvorrichtung 13 in Betrieb setzten zu können. Der Trennschalter 22 bzw. die Kontaktbrücke 25 ist mittels eines Ankers 28, der durch eine elektromagnetisch arbeitende Spule 31 betätigbar ist, bewegbar. Im Betätigungsfall liegt an der Spule 31 eine Spulenspannung U_{S} an. Die in Figur 1a dargestellte Startvorrichtung 13 kann beispielsweise als ein nach dem Trägheitsprinzip arbeitender Starter sein, der ohne Einrückrelais auskommt.

In Figur 1b ist ein etwas detaillierter dargestelltes Energieversorgungssystem 10 für konventionelle Startvorrichtungen 13 (Schub-Schraubtrieb-Starter) darstellt. Gemäß dieser Darstellung wird der Trennschalter 22 bzw. dessen Spule 31 von einem Zünd-/Startschalter bzw. Startsteuergerät bestromt. Mittels der Kontaktbrücke 25 wird sowohl die "Klemme 30", welche den Startermotor üblicherweise mit Leistungsstrom versorgt, als auch die "Klemme 50", die ein Einrückrelais 32 bestromt. Im Einrückrelais 32 sind eine Einzugsspule EW und eine Haltespule HW angeordnet.

In Figur 1c ein von der Darstellung nach Figur 1b leicht modifiziertes Energieversorgungssystem 10 für konventionelle Startvorrichtungen 13 (Schub-Schraubtrieb-Starter) darstellt. Gemäß dieser Darstellung wird der Trennschalter 22 bzw. dessen Spule 31 von einem Zünd-/Startschalter bzw. Startsteuergerät bestromt. Mittels der Kontaktbrücke 25 wird nur die "Klemme 30" mit Leistungsstrom versorgt. Die "Klemme 50" wird direkt von einem Zünd-/Startschalter bzw. Startsteuergerät bestromt.

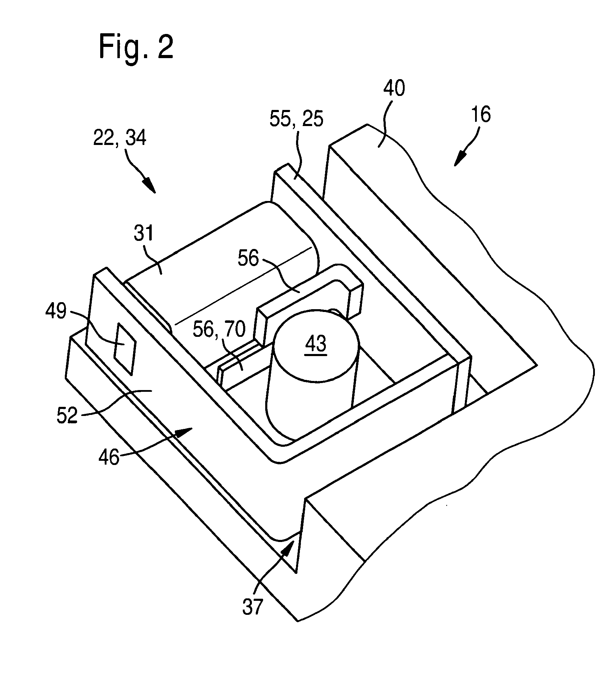

In Figur 2 ist ein erstes Ausführungsbeispiel eines Trennschalters 22 dargestellt. Der Trennschalter 22 ist hier als so genanntes Klappankerrelais 34 ausgebildet. Der Trennschalter 22 sitzt hier in einer Batteriepolwanne 37, wie sie üblicherweise bei Batteriedeckeln 40 vorhanden sind. In dieser Batteriepolwanne 37 sitzt die Batteriepolklemme 43, an der der Trennschalter 22 befestigt ist. Der Trennschalter 22 ist größenmäßig an die Batteriepolwanne 37 angepasst und sitzt hier auch vollständig in der Batteriepolwanne 37. Zur optimalen Ausnutzung der Batteriepolwanne 37 ist hier vorgesehen, dass der Trennschalter 22 einen magnetischen Kreis 46 hat, der die Batteriepolklemme 43 umgibt. Zu diesem elektromagnetischen Kreis 46 gehört hier bspw. ein Kern 49, der von der Spule 31 umgeben ist. Des Weiteren gehört hierzu ein Bügel 52, der eine unmittelbare elektromagnetische Verlängerung des Kerns 49 darstellt. Von diesem Bügel 52 geht letztlich ein Klappanker 55 aus, der durch das Einschalten der Spule 31 und den Aufbau des elektromagnetischen Feldes im elektromagnetischen Kreis 46 an den Kern 49 herangezogen wird. Durch diese Verlagerung des Klappankers 55, der übrigens der Kontaktbrücke 25 entspricht, werden zwei Doppelkontakte 56 elektrisch leitfähig miteinander verbunden. Da mit einem der beiden Doppelkontakte 56 die Energieversorgungsleitung 19 verbunden ist, wird dann die Startvorrichtung 13 bestromt. Der in Figur 2 untere der beiden Doppelkontakte 56 entspricht als Laststromschiene 70 der Klemme 30, wie sie üblicherweise normgerecht bezeichnet wird. An der Stromschiene 70 ist der Trennschalter 22 gehalten und befestigt. Diese Klemme 30 dient hier sowohl zur mechanischen Befestigung des Trennschalters 22 als auch zur elektrischen, direkten Kontaktierung des Trennschalters 22 mit dem Energiespeicher 16. Der zweite Doppelkontakt 56, welcher über dem ersten Doppelkontakt 56 angeordnet ist, entspricht als Laststromschiene der so genannten Klemme 45, auch diese ist eine normentsprechende Bezeichnung. Diese "Klemme 45" wird isoliert nach außen geführt. An diese Laststromschiene (Klemme 45) wird die Energieversorgungsleitung 19 geschraubt oder anderweitig befestigt, sodass diese Energieversorgungsleitung 19 bei geöffnetem Klappanker 55 spannungsfrei ist. Wird die Spule 31 über ein Ansteuersignal (Klemme 50) bestromt, zieht der Klappanker 55 an und schließt den Hauptkontakt. Die Startvorrichtung 13 wird bestromt und der Startvorgang kann stattfinden.

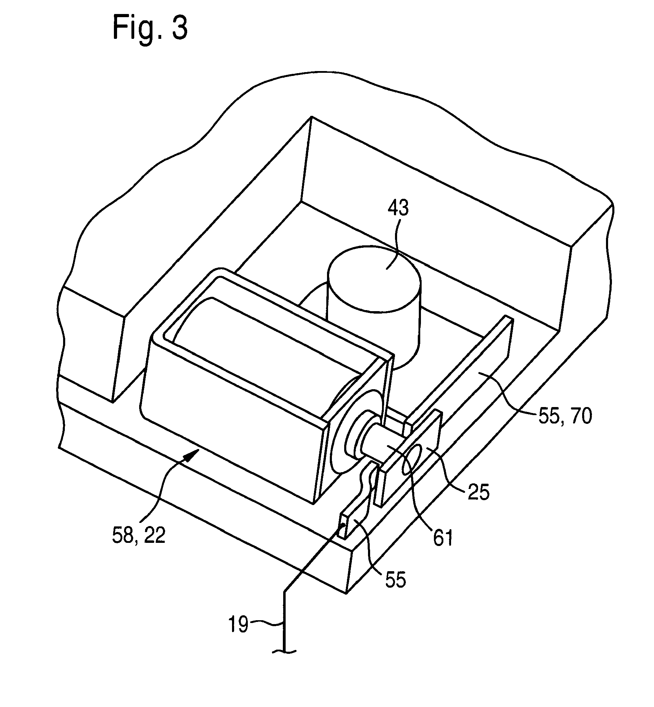

In Figur 3 ist ein zweites Ausführungsbeispiel für einen Trennschalter 22 dargestellt. Auch dieser Trennschalter 22 ist an die Batteriepolwanne 37, wie zuvor beschrieben, angepasst. Das in Figur 3 dargestellte Tauchankerrelais 58 funktioniert auf ähnliche Weise wie das Klappankerrelais 34. Das Tauchankerrelais 58 weist wiederum eine Spule 31 auf, in deren Zentrum ein Anker 61 verschiebbar gelagert ist. An dem freien, außerhalb der Spule 31 liegenden Ende des Ankers 61 befindet sich eine Kontaktbrücke 25. Beiderseits der Kontaktbrücke 25 sind die Doppelkontakte 55 angeordnet, wobei der zum Energiespeicher 16 gerichtete Doppelkontakt 55 als Stromschiene 70 ausgebildet ist, an der der Trennschalter 22 gehalten und befestigt ist. Auf der anderen Seite der Kontaktbrücke 25 und somit in Richtung zur Startvorrichtung 13 ist der andere Doppelkontakt 55 angeordnet, an den die Energieversorgungsleitung 19 befestigt ist. Die Funktion dieses Tauchankerrelais 58 ist die gleiche wie beim Klappankerrelais 34. Bekommt das Relais 58 ein Ansteuersignal (Klemme 50), so werden die Doppelkontakte 55 über die Kontaktbrücke 25 geschlossen und die Startvorrichtung 13 bestromt.

## Patentansprüche

1. Energieversorgungssystem für Startvorrichtungen, mit einem Energiespeicher(16) und einer Startvorrichtung (13), die von dem Energiespeicher (16) mit elektrischer Energie versorgbar ist, mit einer Energieversorgungsleitung (19), welche die elektrische Energie vom Energiespeicher (16) zur Startvorrichtung (13) leitet, mit einem Trennschalter (22) zwischen dem Energiespeicher (16) und der Startvorrichtung (13), wobei der Trennschalter (22) reversibel und unmittelbar am Energiespeicher (16) angeordnet ist und der Trennschalter (22) ein elektromagnetischer Schalter ist, **dadurch gekennzeichnet, dass** der Trennschalter (22) einen magnetischen Kreis (46) hat, der eine Batteriepolklemme (43) umgibt.

2. Energieversorgungssystem nach Anspruch 1, **dadurch gekennzeichnet, dass** der Trennschalter (22) größenmäßig an eine Batteriepolwanne (37) angepasst ist.

3. Energieversorgungssystem nach Anspruch 2, **dadurch gekennzeichnet, dass** der Trennschalter (22) vollständig in der Batteriepolwanne (37) sitzt.

4. Energieversorgungssystem nach einem der Ansprüche 1 bis 3, **dadurch gekennzeichnet, dass** der Trennschalter (22) ein Klappankerrelais (34) ist.

5. Energieversorgungssystem nach einem der Ansprüche 1 bis 3, **dadurch gekennzeichnet, dass** der Trennschalter (22) ein Tauchankerrelais (58) ist.

6. Energieversorgungssystem nach einem der Ansprüche 1 bis 5, **dadurch gekennzeichnet, dass** der Trennschalter (22) eine Kontaktbrücke (25) hat, die zur Verbindung eines Doppelkontakts (55) vorgesehen ist.

7. Energieversorgungssystem nach einem der vorstehenden Ansprüche, **dadurch gekennzeichnet, dass** an der Batteriepolklemme (43) eine den Trennschalter (22) haltende Stromschiene (70) befestigt ist.

## Claims

1. Power supply system for starting apparatuses, having an energy store (16) and a starting apparatus (13) which can be supplied with electrical power from the energy store (16), having a power supply line (19) which carries the electrical power from the energy store (16) to the starting apparatus (13), having an isolating switch (22) between the energy store (16) and the starting apparatus (13), wherein the isolating switch (22) is arranged reversibly and directly adjacent to the energy store (16), and the isolating switch (22) is an electromagnetic switch, **characterized in that** the isolating switch (22) has a magnetic circuit (46) which surrounds a battery pole terminal (43).

2. Power supply system according to Claim 1, **characterized in that** the dimensions of the isolating switch (22) are matched to a battery pole trough (37).

3. Power supply system according to Claim 2, **characterized in that** the isolating switch (22) is seated completely in the battery pole trough (37).

4. Power supply system according to one of Claims 1 to 3, **characterized in that** the isolating switch (22) is a folding armature relay (34).

5. Power supply system according to one of Claims 1 to 3, **characterized in that** the isolating switch (22) is a plunger armature relay (58).

6. Power supply system according to one of Claims 1 to 5, **characterized in that** the isolating switch (22) has a contact link (25) which is provided for connection of a double contact (55).

7. Power supply system according to one of the preceding claims, **characterized in that** a busbar (70) which holds the isolating switch (22) is attached to the battery pole terminal (43).

## Revendications

1. Système d'alimentation en énergie pour dispositifs de démarrage, doté d'un accumulateur d'énergie (16) et d'un dispositif de démarrage (13) qui peut être alimenté en énergie électrique par l'accumulateur d'énergie (16),
d'un conducteur (19) d'alimentation en énergie qui conduit l'énergie électrique de l'accumulateur d'énergie (16) au dispositif de démarrage (13),
d'un commutateur de séparation (22) entre l'accumulateur d'énergie (16) et le dispositif de démarrage (13),
le commutateur de séparation (22) étant réversible et disposé directement sur l'accumulateur d'énergie (16),
le commutateur de séparation (22) étant un commutateur électromagnétique,
**caractérisé en ce que**
le commutateur de séparation (22) présente un circuit magnétique (46) qui entoure une borne polaire (43) de la batterie.

2. Système d'alimentation en énergie selon la revendication 1, **caractérisé en ce que** le commutateur de séparation (22) a une taille adaptée à celle de la cuvette (37) du pôle de la batterie.

3. Système d'alimentation en énergie selon la revendication 2, **caractérisé en ce que** le commutateur de séparation (22) repose complètement dans la cuvette (37) du pôle de la batterie.

4. Système d'alimentation en énergie selon l'une des revendications 1 à 3, **caractérisé en ce que** le commutateur de séparation (22) est un relais (34) à induit basculant.

5. Système d'alimentation en énergie selon l'une des revendications 1 à 3, **caractérisé en ce que** le commutateur de séparation (22) est un relais (58) à induit plongeant.

6. Système d'alimentation en énergie selon l'une des revendications 1 à 5, **caractérisé en ce que** le commutateur de séparation (22) possède un pont de contact (25) prévu pour être relié à un double contact (55).

7. Système d'alimentation en énergie selon l'une des revendications précédentes, **caractérisé en ce qu'**un rail de courant (70) qui maintient le commutateur de séparation (22) est fixé sur la borne polaire (43) de la batterie.
